# EUROPEAN PATENT SPECIFICATION

(11) **EP 2 870 846 B1**
(45) Date of publication and mention of the grant of the patent: **19.10.2016**
(21) Application number: 14191869.8
(22) Date of filing: 05.11.2014
(51) Int. Cl.: A01B 73/04, A01C 7/08

(54) **Agricultural implement**
Landwirtschaftliches Arbeitsgerät
Outil agricole

(30) Priority: 12.11.2013 US 201314078161
(43) Date of publication of application: 13.05.2015
(73) Proprietor: Deere & Company, Moline, IL 61265 (US)
(72) Inventor: Groves, Tyler G., Bettendorf, IA Iowa 52722 (US); Quam, Dale A., Bettendorf, IA Iowa 52722 (US); Graham, Douglas, East Moline, IA Iowa 61244-4272 (US); Hoehn, Kevin W., Davenport, IA Iowa 52807 (US)
(74) Representative: Reichert, Christian

(56) References cited:
- EP-A1- 0 271 119
- EP-A1- 0 619 938
- EP-A1- 1 415 527
- EP-A1- 1 752 031
- EP-A1- 2 011 381
- DE-A1-102007 053 559

## Description

The present disclosure relates to an agricultural implement comprising a frame, a tower, a manifold attached to the tower, and a retractable mount attaching the tower to the frame configured to allow the tower and the attached manifold to move between an extended position and a retracted position relative to the frame, wherein a distance between the manifold and the frame is greater in the extended position than in the retracted position and wherein the frame comprises a first frame portion pivotally attached to a second frame portion, the frame being moveable to a folded transport position by pivoting the first frame portion and the second frame portion relative to one another.

An air seeder is disclosed in DE 10 2007 053559 A1, wherein the seeder has a storage container connected to a distribution head from which seed or fertilizer is directed towards distributor elements e.g. sowing coulters, through a set of distribution conduits. A height adjusting device is associated with the distribution head so as to adjust the height of the head. The height adjusting device is equipped with a telescopic raising tube, and moves the distribution head to a lowered transport position and a raised working position.

A further agricultural implement is disclosed in EP 0 619 938 A1 , wherein soil working members and a pneumatic seed drill are accommodated in a frame. The seed drill includes, connected to a carrier, seed delivery members for depositing seeds in the soil and at least one distributor member.

Agricultural implements, such as air seeders and fertilizers used for farming, typically use a raised manifold connected to distribution lines to distribute the seed or fertilizer.

The manifold has to have a certain height above the ground so that the distribution lines have an adequate slope to maintain good product flow and eliminate blockage within the distribution lines. When the manifold is elevated to this height, the frame and other equipment connected to the implement makes it difficult to fold the implement into a transport position because the height of the manifold interferes with the folding of the implement.

An agricultural implement is needed which will solve one or more of the problems of the current implements.

According to the invention an agricultural implement is disclosed having a frame, a tower, a manifold, and a retractable mount. The manifold is attached to the tower. The retractable mount allows the tower and the attached manifold to move between an extended position and a retracted position relative to the frame as the frame moves between folded and unfolded positions. A distance between the manifold and the frame is greater in the extended position than in the retracted position. Further the tower, the manifold, and the retractable mount are carried by a first frame portion, the retractable mount comprises a contact member, and when the frame is moved into the folded transport position the contact member and the second frame portion contact one another thereby moving the tower and the attached manifold from the extended position to the retracted position.

These and other features, aspects and advantages of the disclosure will become better understood with reference to the following drawings, description and claims.
Fig. 1 illustrates a side view of one embodiment of an air seeder for planting seeds comprising a seed cart towed between a tractor and a tilling implement to move the air seeder;
Fig. 2 illustrates a top view of a portion of one embodiment of the tilling implement of Fig. 1 without showing the primary distribution line, towers, manifold, secondary distribution lines, and ground openers of Fig. 1 for clarity;
Fig. 3 illustrates a side perspective view of one embodiment of a retractable mount attached to the towers and manifold of Fig. 1 without showing the rest of the tilling implement for clarity;
Fig. 4 illustrates a rear view of one embodiment of a retractable mount, towers, and manifold of Fig. 3 carried by and attached to a first frame portion pivotally attached to a second frame portion of a tilling implement with a moving member in an extended position;
Fig. 5 illustrates the rear view of the retractable mount, towers, and manifold of Fig. 4 carried by and attached to the first frame portion pivotally attached to the second frame portion of the tilling implement with the moving member having moved to a retracted position; and
Fig. 6 illustrates a side perspective view of the embodiment of Fig. 3 with everything identical with the exception that an actuator has been connected to a linkage rather than a spring and an upper portion of the moving member has been removed.

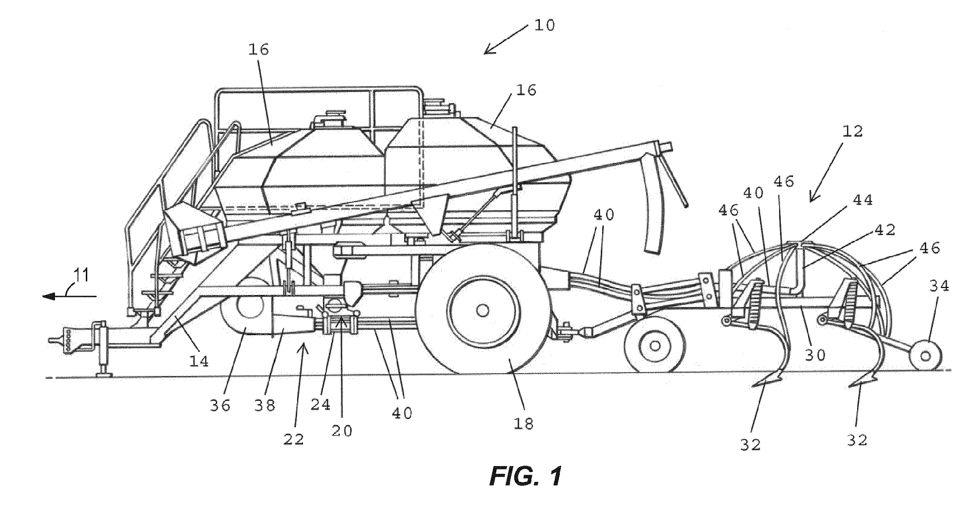

Fig. 1 illustrates a side view of one embodiment of an air seeder for planting seeds comprising a seed cart 10 towed between a tractor (not shown) and a tilling implement 12 to move the air seeder in direction 11. In other embodiments, the seed cart 10 and the implement 12 may comprise any type of implement and is not limited to an air seeder or even to an agricultural implement. The seed cart 10 has a frame 14 to which product tanks 16 and wheels 18 are mounted. Each product tank 16 has an associated metering system 20 at its lower end for controlled feeding of product into a pneumatic distribution system 22 at a primary distribution manifold 24. The tilling implement 12, towed behind the seed cart 10, consists generally of a frame 30 to which ground openers 32 are mounted. Incorporation of seed row finishing equipment such as closing wheels 34 is also desirable in many applications.

The pneumatic distribution system 22 includes a centrifugal fan 36 connected to a plenum 38, which is in turn connected to one or more manifolds 24, each associated with a product tank 16. The individual passages in the manifold 24 are each connected by a primary distribution line 40 to a tower 42. Each tower 42 is in turn coupled to one of a plurality of manifolds 44. Secondary distribution lines 46 connect the manifolds 44 to seed boots mounted on the ground openers 32 to deliver product, seed or fertilizer, etc. to the furrow formed by the openers 32. Further detail of the air seeder can be found in US Patent No. 5,878,679 or US Patent No. 8,505,574 which are both hereby incorporated by reference in their entirety. While the air seeder of Fig. 1 is shown as a separate seed cart 10 connected to a tilling implement 12, the product tanks 16, metering system 20 and distribution system 22 can be mounted to the same frame 30 as the ground openers 32.

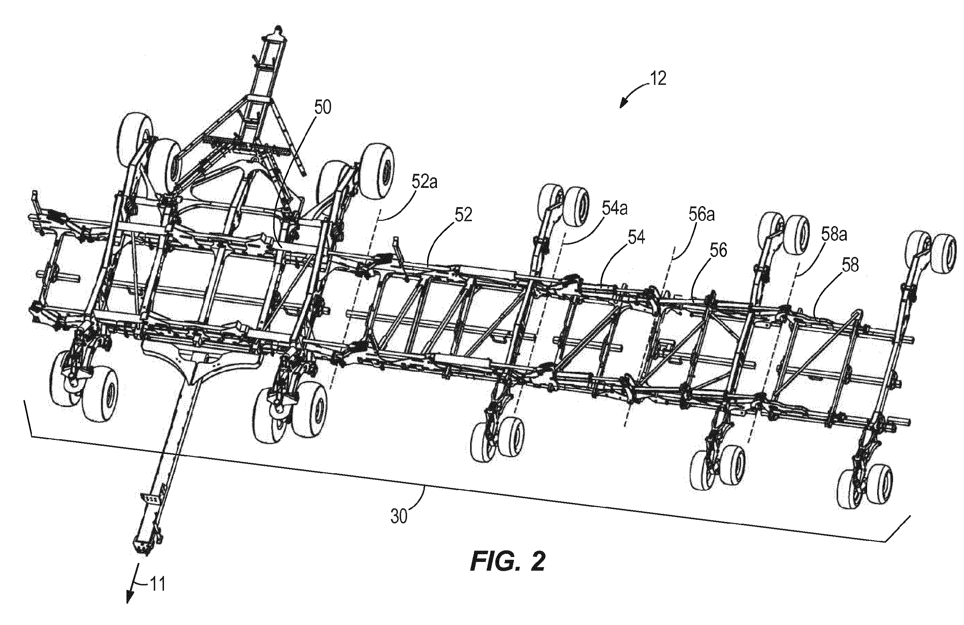

Fig. 2 illustrates a top view of a portion of one embodiment of the tilling implement 12 of Fig. 1 without showing the primary distribution line, towers, manifolds, secondary distribution lines, and ground openers of Fig. 1 for clarity. The tilling implement 12 is configured to move in direction 11 when towed behind the seed cart 10 of Fig. 1. The frame 30 of the tilling implement 12 comprises a center portion 50. A plurality of left and right frame portions extends from the center portion 50 of the frame 30. Only the right frame portions 52, 54, 56, and 58 are shown in Fig. 2 for purposes of clarity. The left side (which is not shown) is a mirror image of the right side comprising the right frame portions 52, 54, 56, and 58. Right frame portion 52 is pivotally attached to center portion 50 for rotation about axis 52a. Right frame portion 54 is pivotally attached to right frame portion 52 for rotation about axis 54a. Right frame portion 56 is pivotally attached to right frame portion 54 for rotation about axis 56a. Right frame portion 58 is pivotally attached to right frame portion 56 for rotation about axis 58a. When the tilling implement 12 is put into a folded transport position by a hydraulic system comprising hydraulic cylinders (not shown), the right frame portions 52, 54, 56, and 58 are pivotally rotated about their respective axis 52a, 54a, 56a, and 58a to dispose them on top of the center portion 50 in a folded position to allow easy storage and transport of the tilling implement 12. Further detail regarding the tilling implement 12 is provided in US Patent No. 8,505,645 which is hereby incorporated by reference in its entirety. In other embodiments, the tilling implement 12 may comprise any number, configuration, and size of pivotally attached frame portions which may be rotated relative to one another using any type of system.

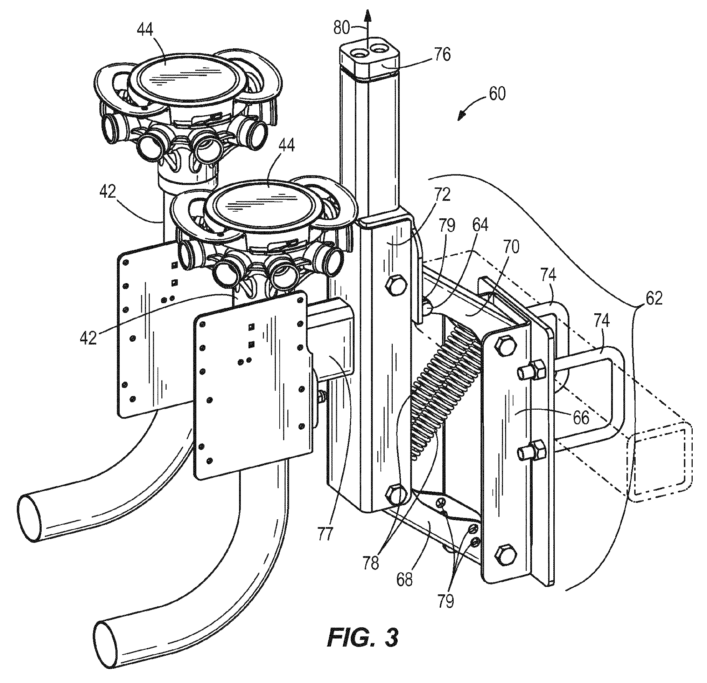

Fig. 3 illustrates a side perspective view of one embodiment of a retractable mount 60 attaching the towers 42 and manifolds 44 to the frame without showing the rest of the tilling implement for clarity. The retractable mount 60 includes a linkage 62 and a stop member 64. The linkage 62 is a four bar linkage with a fixed base member 66, links 68 and 70, and moving member 72. Base member 66 is fixed to the frame by a securement member 74 shown in this embodiment as U-bolts. In other embodiments, the securement member 74 may vary. Links 68 and 70 are pivotally attached to the base member 66. Moving member 72 is pivotally attached to links 68 and 70. Moving member 72 includes a low friction bumper stop 76 at its upper end. Springs 78 are attached to the linkage 62 in a manner to bias moving member 72 in direction 80. Member 77 attaches towers 42 to moving member 72. The manifolds 44 are attached to towers 42. The stop member 64 comprises one or more pins which may be inserted through various holes 79 in links 68 or 70 in order to set the upper position of the moving member 72 and thereby set a maximum distance (or height) of the manifolds 44 relative to the frame. The stop member 64 controls how far the linkage 62 is allowed to be extended in direction 80 by the springs 78.

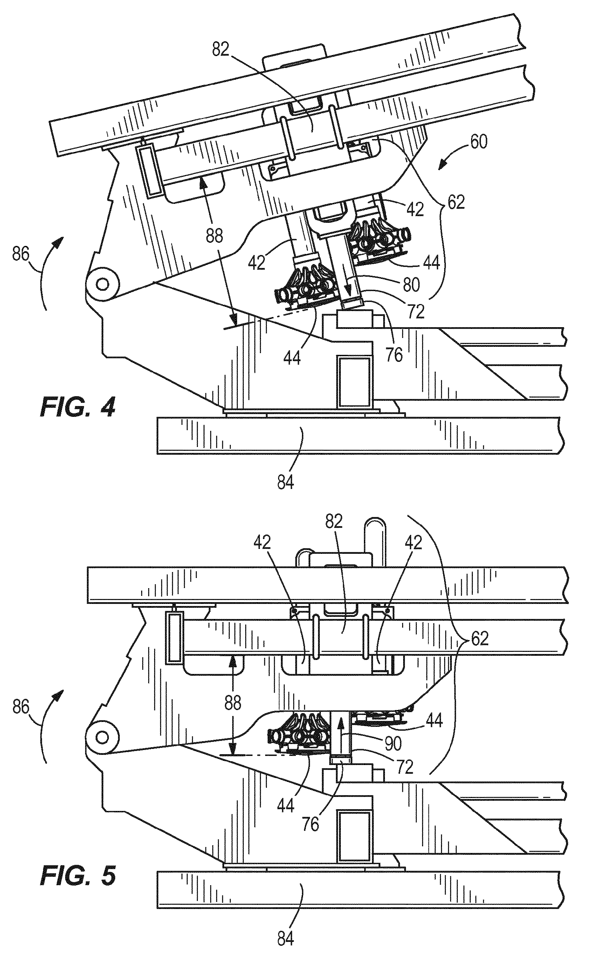

Fig. 4 illustrates a rear view of the retractable mount 60, towers 42, and manifolds 44 of Fig. 3 carried by and attached to a first frame portion 82 which is pivotally attached to a second frame portion 84 of a tilling implement. The first frame portion 82 and the pivotally attached second frame portion 84 may comprise any of the pivotally attached center portion 50 and right frame portions 52, 54, 56, and 58 of the tilling implement 12 of Fig. 2. In other embodiments, varying pivotally attached first and second frame portions of varying tilling implements may be used. As shown, the first frame portion 82 has been partially pivoted in direction 86 towards a folded position against the second frame portion 84. The bumper stop 76 of the moving member 72 of the linkage 62 is just beginning to contact the second frame portion 84. The linkage 62, the attached towers 42, and the attached manifolds 44 are in their extended position with the distance 88 between the manifolds 44 and the first frame portion 82 maximized due to the springs 78 (shown in Fig. 3) biasing the linkage 62 in direction 80.

Fig. 5 illustrates the first frame portion 82 completely pivoted in direction 86 into its folded transport position against the second frame portion 84. As the frame portion 82 moves from the position shown in Fig. 4 to the completely folded position of Fig. 5, the contact between the bumper stop 76 and frame portion 84 causes the linkage 62 to retract in direction 90 into its retracted position. As a result, the moving member 72 and the attached towers 42 and manifolds 44 are moved to their retracted position, in opposition to the springs 78 (shown in Fig. 3), with the distance 88 between the manifolds 44 and the first frame portion 82 being minimized.

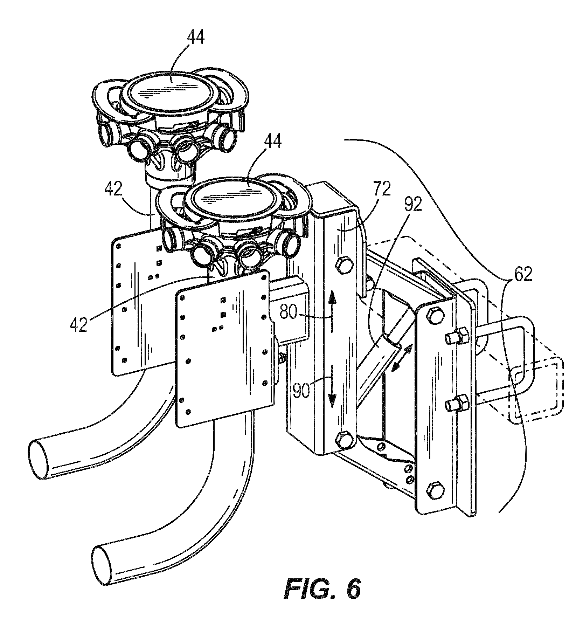

Fig. 6 illustrates a side perspective view of the embodiment of Fig. 3 with everything identical with the exception that an actuator 92 has been connected to the linkage 62 rather than a spring and the upper portion of moving member 72 has been removed. The actuator 92 is configured to alternately move the moving member 72 and the attached towers 42 and manifolds 44 in direction 80 into their extended position and in direction 90 into their retracted position. The actuator 92 may be electric, pneumatic or hydraulic. Preferably, the actuator is hydraulic and part of the hydraulic system used to fold the implement and which is actuated as a part of the folding process. In other embodiments, the retractable mount 60 could be a telescoping assembly which retracts when contacted by a contact member.

Various modifications can be made to the implement. For example, the bumper stop 76 can be replaced with a roller oriented to roll across the frame surface upon contact instead of the sliding motion of the bumper stop 76. The bumper stop and roller can be broadly referred to as a contact member. Also, the length of the moving member 72 can be changed as needed to vary the point at which the moving member 72 contacts the frame when the frame is being folded. Further, the moving member 72 is fixed to the member 77, the towers 42, and manifolds 44 which move as a unit between the extended and retracted positions. As such, it is possible to mount the bumper stop on any of links 68 and 70, moving member 72, member 77, towers 42, or the manifolds 44. In Figures 4 and 5 the implement (12 as shown in Figure 2) is shown moving in a plane parallel with the axis of rotation (52a, 54a, 56a, and 58a as shown in Figure 2) of the frame portions (52, 54, 56, and 58 as shown in Figure 2). In other embodiments, the implement (12 as shown in Figure 2) may move in a plane perpendicular to the axis of rotation (52a, 54a, 56a, and 58a as shown in Figure 2) of the frame portions (52, 54, 56, and 58 as shown in Figure 2).

One or more embodiments of the disclosure may reduce or eliminate one or more issues of the current implements by providing for an implement having movable mounting system. The movable mounting system allows the height of the one or more manifolds to be moved from an extended or raised use position which provides good product flow and eliminates product blockages in the distribution lines to a retracted storage or transport position which allows for the implement to be folded into a transport position.

## Claims

1. An agricultural implement (12) comprising:
a frame (30);
a tower (42);
a manifold (44) attached to the tower (42); and
a retractable mount (60) attaching the tower (42) to the frame (30) configured to allow the tower (42) and the attached manifold (44) to move between an extended position and a retracted position relative to the frame (30), wherein a distance between the manifold (44) and the frame (30) is greater in the extended position than in the retracted position and wherein the frame (30) comprises a first frame portion (82) pivotally attached to a second frame portion (84), the frame (30) being moveable to a folded transport position by pivoting the first frame portion (82) and the second frame portion (84) relative to one another, whereby the tower (42), the manifold (44), and
the retractable mount (60) are carried by the first frame portion (82), **characterized in that** the retractable mount (60) comprises a contact (76) member, and when the frame (30) is moved into the folded transport position the contact member (76) and the second frame portion (84) contact one another thereby moving the tower (42) and the attached manifold (44) from the extended position to the retracted position.

2. The agricultural implement (12) of claim 1 further comprising an actuator (92) configured to move the tower (42) and the attached manifold (44) relative to the frame (30) between the extended position and the retracted position.

3. The agricultural implement (12) of claim 1 or 2 wherein the retractable mount (60) comprises a linkage (62) attached between the frame (30) and the tower (42).

4. The agricultural implement (12) of claim 3 wherein the retractable mount (60) comprises a spring (78) biasing the linkage (62).

5. The agricultural implement (12) of one of the claims 1 to 4 wherein the tower (42) is telescoping.

6. The agricultural implement (12) of one of the claims 1 to 5 further comprising a stop member (64) configured to set a maximum distance between the frame (30) and the manifold (44)..

## Patentansprüche

1. Landwirtschaftliches Arbeitsgerät (12), das Folgendes umfasst:
einen Rahmen (30);
einen Turm (42);
einen am Turm (42) befestigten Verteiler (44); und
eine einziehbare Halterung (60), mit der der Turm (42) am Rahmen (30) befestigt wird und die ausgelegt ist, um dem Turm (42) und dem daran befestigten Verteiler (44) zu ermöglichen, sich bezogen auf den Rahmen (30) zwischen einer ausgefahrenen Position und einer eingezogenen Position zu bewegen, wobei
eine Entfernung zwischen dem Verteiler (44) und dem Rahmen (30) in der ausgefahrenen Position größer als in der eingezogenen Position ist und wobei der Rahmen (30) einen ersten Rahmenabschnitt (82) umfasst, der schwenkbar an einem zweiten Rahmenabschnitt (84) befestigt ist, wobei der Rahmen (30) in eine zusammengefaltete Transportposition bewegbar ist, indem der erste Rahmenabschnitt (82) und der zweite Rahmenabschnitt (84) bezogen aufeinander geschwenkt werden, wobei
der Turm (42), der Verteiler (44), und
die einziehbare Halterung (60) vom ersten Rahmenabschnitt (82) getragen werden,
**dadurch gekennzeichnet, dass**
die einziehbare Halterung (60) ein Kontaktelement (76) umfasst, und wenn der Rahmen (30) in die gefaltete Transportposition bewegt wird, das Kontaktelement (76) und der zweite Rahmenabschnitt (84) einander berühren und somit den Turm (42) und den daran befestigten Verteiler (44) aus der ausgefahrenen Position in die eingezogene Position bewegen.

2. Landwirtschaftliches Arbeitsgerät (12) nach dem Anspruch 1, das weiterhin ein Stellelement (92) umfasst, das ausgelegt ist, um den Turm (42) und den daran befestigten Verteiler (44) bezogen auf den Rahmen (30) zwischen der ausgefahrenen Position und der eingezogenen Position zu bewegen.

3. Landwirtschaftliches Arbeitsgerät (12) nach dem Anspruch 1 oder 2, wobei die einziehbare Halterung (60) eine Verbindung (62) umfasst, die zwischen dem Rahmen (30) und dem Turm (42) befestigt ist.

4. Landwirtschaftliches Arbeitsgerät (12) nach dem Anspruch 3, wobei die einziehbare Halterung (60) eine Feder (78) umfasst, die die Verbindung (62) beeinflusst.

5. Landwirtschaftliches Arbeitsgerät (12) nach einem der Ansprüche 1 bis 4, wobei der Turm (42) eine Teleskopfunktion aufweist.

6. Landwirtschaftliches Arbeitsgerät (12) nach einem der Ansprüche 1 bis 5, das weiterhin ein Anschlagelement (64) umfasst, das ausgelegt ist, um eine maximale Entfernung zwischen dem Rahmen (30) und dem Verteiler (44) festzulegen.

## Revendications

1. Outil agricole (12) comprenant :
un châssis (30) ;
un montant (42) ;
un distributeur (44) fixé au montant (42) ; et
un support rétractable (60) fixant le montant (42) au châssis (30) configuré pour permettre au montant (42) et au distributeur (44) fixé à lui de se déplacer entre une position étendue et une position rétractée par rapport au châssis (30), une distance entre le distributeur (44) et le châssis (30) étant plus grande dans la position étendue que dans la position rétractée et le châssis (30) comprenant une première partie de châssis (82) fixée à pivotement à une seconde partie de châssis (84), le châssis (30) étant mobile jusqu'à une position de transport pliée par pivotement de la première partie de châssis (82) et de la seconde partie de châssis (84) l'une par rapport à l'autre, le montant (42), le distributeur (44) et le support rétractable (60) étant alors supportés par la première partie de châssis (82), **caractérisé en ce que** le support rétractable (60) comprend un élément de contact (76), et lorsque le châssis (30) est déplacé jusqu'à la position de transport pliée, l'élément de contact (76) et la seconde partie de châssis (84) sont en contact l'une avec l'autre, ceci déplaçant le montant (42) et le distributeur (44) fixé à lui de la position étendue à la position rétractée.

2. Outil agricole (12) selon la revendication 1, comprenant en outre un dispositif d'actionnement (92) configuré pour déplacer le montant (42) et le distributeur (44) fixé à lui par rapport au châssis (30) entre la position étendue et la position rétractée.

3. Outil agricole (12) selon la revendication 1 ou 2, dans lequel le support rétractable (60) comprend une tringlerie (62) fixée entre le châssis (30) et le montant (42).

4. Outil agricole (12) selon la revendication 3, dans lequel le support rétractable (60) comprend un ressort (78) sollicitant la tringlerie (62).

5. Outil agricole (12) selon l'une des revendications 1 à 4, dans lequel le montant (42) est télescopique.

6. Outil agricole (12) selon l'une des revendications 1 à 5, comprenant en outre un élément d'arrêt (64) configuré pour définir une distance maximale entre le châssis (30) et le distributeur (44).
